# EUROPÄISCHE PATENTSCHRIFT

(11) **EP 1 305 520 B1**
(45) Veröffentlichungstag und Bekanntmachung des Hinweises auf die Patenterteilung: **03.05.2006**
(21) Anmeldenummer: 01951389.4
(22) Anmeldetag: 15.06.2001
(51) Int. Cl.: F02M 59/36, F02M 57/02, F02M 59/46, F02M 45/02, F02D 41/40, F02D 41/20

(54) **VERFAHREN ZUR STEUERUNG EINES EINSPRITZVENTILS**
METHOD FOR CONTROLLING AN INJECTION VALVE
PROCEDE POUR COMMANDER UNE SOUPAPE D'INJECTION

(30) Priorität: 22.07.2000 DE 10035815
(43) Veröffentlichungstag der Anmeldung: 02.05.2003
(73) Patentinhaber: ROBERT BOSCH GMBH, 70442 Stuttgart (DE)
(72) Erfinder: BOSS, Juergen, 70806 Kornwestheim (DE); ZIMMERMANN, KLAUS, 73257 Koengen (DE); HOYLER, Andreas, 73779 Deizisau (DE)
(86) Internationale Anmeldenummer: PCT/DE2001/002233
(87) Internationale Veröffentlichungsnummer: WO 2002/008599

(56) Entgegenhaltungen:
- DE-A- 19 930 309
- US-A- 4 705 003
- US-A- 4 784 102
- US-A- 5 152 271
- US-A- 5 407 131

## Beschreibung

### Stand der Technik

Die Erfindung geht aus von einem Verfahren zur Steuerung eines Einspritzventils (Injektors), mit dem eine vorgegebene Kraftstoffmenge nach der Gattung des Hauptanspruchs in den Zylinder eines Verbrennungsmotors eingespritzt wird. Verfahren zur Kraftstoffeinspritzung in einen Verbrennungsmotor, insbesondere bei der Direkteinspritzung sind schon bekannt. Beispielsweise wird bei einer Pumpen-Düseneinheit (PDE) ein Schaltventil mittels eines magnetisch angetriebenen Aktors im Takte eines Ansteuersignals gesteuert, um eine vorgegebene Kraftstoffmenge über eine Düsennadel in den Verbrennungsraum des Motors mit hohem Druck einzuspritzen. Dabei tritt das Problem auf, auch möglichst sehr kleine kontrollierbare Mengen von Kraftstoff einzuspritzen. Diese kleinen Mengen liegen in einer Größenordnung bis zu 2 mm³ für alle Betriebszustände. Bei bekannten magnetgesteuerten Aktoren sind diese kleinen Mengen insbesondere bei großen Drehzahlen des Motors nicht realisierbar, da das Schaltventil zwischen dem geöffneten und geschlossenen Zustand nur sehr begrenzt Zwischenstellungen einstellen kann. Piezo-Aktoren steuern dagegen die Einspritzmenge lediglich über einen konstanten Öffnungsquerschnitt, der vom Schaltventil mit dessen Sitz im Zulaufkanal gebildet wird.

### Vorteile der Erfindung

Das erfindungsgemäße Verfahren zur Steuerung eines Einspritzventils mit den kennzeichnenden Merkmalen des Hauptanspruchs hat demgegenüber den Vorteil, dass zur Steuerung der Kraftstoffmenge das Ansteuersignal für den Aktor sowohl in seiner Höhe als auch in seiner Dauer veränderbar ist. Das hat den Vorteil, dass nicht nur bei niedriger Drehzahl und geringer Last eine genau dosierte kleine Kraftstoffmenge eingespritzt werden kann. Vielmehr ist es auch möglich, insbesondere bei einem piezoelektrischen Aktor sowohl durch die Höhe der Ansteuerspannung, als auch durch die Dauer des anliegenden Steuersignals die einzuspritzende Kraftstoffmenge gezielt und in Abhängigkeit von der Motorlast und Drehzahl definiert einzuspritzen. Besonders vorteilhaft ist, daß auch Parameter berücksichtigt werden können, die motorische, emissionsrelevante und fahrspezifische Komponenten enthalten.

Durch die in den abhängigen Ansprüchen aufgeführten Maßnahmen sind vorteilhafte Weiterbildungen und Verbesserungen des im Hauptanspruch angegebenen Verfahrens möglich. Als besonders günstig wird angesehen, dass das Ansteuersignal zunächst so gewählt wird, dass sich das Schaltventil im ballistischen Betrieb befindet und somit den Öffnungsquerschnitt für den Zulaufkanal freigibt. Soll die Einspritzmenge erhöht werden, dann wird bei zunächst gleicher Förderdauer einfach auch die Amplitude des Ansteuersignals erhöht, so dass sich der Öffnungsquerschnitt des Zulaufkanals verengt. In dieser Phase bleibt die Dauer des Ansteuersignals konstant.

Für eine weitere Steigerung der Einspritzmenge wird vorteilhaft das Schaltventil in den nichtballistischen Betrieb gesteuert. Dadurch können auch nach dem Übergang in den nichtballistischen Betrieb weitere Erhöhungen der einzuspritzenden Kraftstoffmenge erzielt werden.

Als vorteilhaft wird auch angesehen, die Förderdauer so lange zu erhöhen, bis die einzuspritzende Kraftstoffmenge größer ist als die bei geschlossenem Steuerventil erreichbare Menge mit einem kurzen Ansteuersignal. In diesem Fall ist zur Erreichung eines günstigen Motorverhaltens wenigstens ein Sprung für die Förderdauer und die Amplitude des Ansteuersignals vorsehbar, um eine Veränderung in der Mengenbestimmung zu erreichen.

So kann vorteilhaft bei nur einem Sprung die maximale Amplitude des Ansteuersignals gewählt werden. Die weitere Erhöhung der Einspritzmenge erfolgt dann durch eine Verlängerung der Förderdauer.

Als alternative Ausführung sind mehrere Sprünge vorsehbar, wobei die Ansteuerspannung sprungweise erhöht und bei jedem Sprung die Förderdauer für die vorgegebene Einspritzmenge angepaßt wird.

Das Ansteuersignal kann vorteilhaft bis zu seinem Maximalwert erhöht werden, bei dem das Schaltventil auf dem Ventilsitz aufliegt und den Öffnungsquerschnitt abdichtet. Eine weitere Erhöhung des Ansteuersignals bringt dann keine Erhöhung der Fördermenge mehr. Vielmehr wird diese dann durch eine Verlängerung der Förderdauer erreicht.

Eine vorteilhafte Anwendung des Verfahrens ist bei einem piezoelektrischen Aktor gegeben, der insbesondere bei einem System mit Direkteinspritzung verwendet wird.

### Zeichnung

Ein Ausführungsbeispiel der Erfindung ist in der Zeichnung dargestellt und in der nachfolgenden Beschreibung näher erläutert. Figur 1 zeigt ein Einspritzventil mit einer Pumpen-Düsen-Einheit, Figur 2 zeigt ein erstes Diagramm mit Kennlinien für Einspritzmengen als Funktion von der Förderdauer und Spannung, die Figuren 3a und 3b zeigen Kennlinien für das Ansteuersignal, die Figuren 4a, 4b und 4c zeigen weitere Kennlinien für das Ansteuersignal, Figur 5 zeigt ein zweites Diagramm mit sprunghaften Kennlinien für den Verlauf der Ansteuersignale im Einspritzmengen-Kennfeld und die Figuren 6 und 7 zeigen alternative Kennlinien für das Ansteuersingal.

### Beschreibung der Ausführungsbeispiele

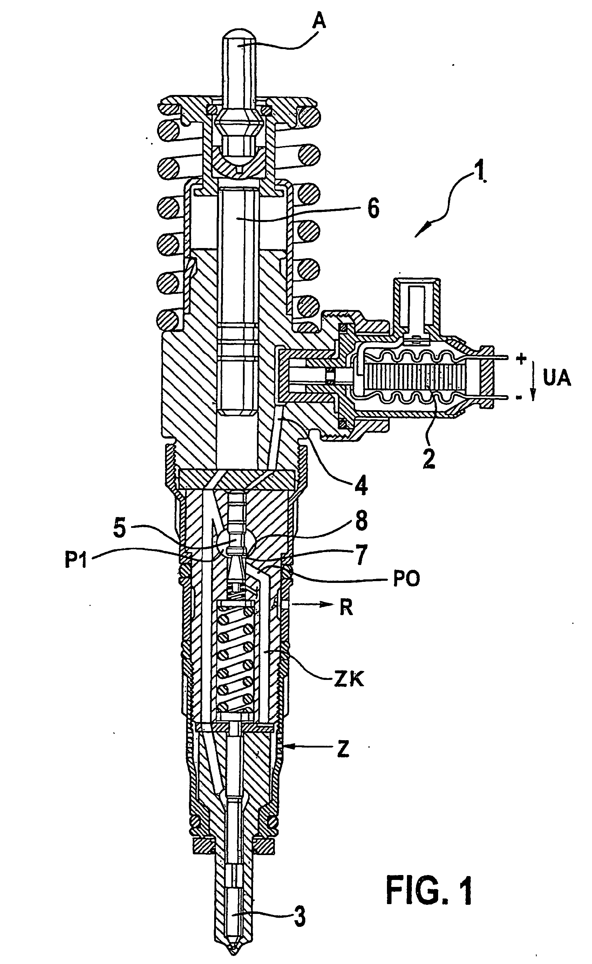

Figur 1 zeigt im Schnittbild ein Einspritzventil 1 mit einer Pumpen-Düsen-Einheit (PDE). Bei dieser bekannten Einheit wird eine Pumpeneinheit 6 von einem Pumpenstößel A betätigt und erzeugt in einem Hochdruckkanal einen hohen Einspritzdruck P1. In dem Hochdruckkanal ist der einzuspritzende Kraftstoff enthalten und kann bei einem entsprechenden Druck über eine Düsennadel 3 in einen Zylinder eines nicht dargestellten Verbrennungsmotors eingespritzt werden. Die Funktionsweise dieses Einspritzventils ist per se bekannt und wird daher nur in seiner Grundfunktion näher erläutert. Als zentrales Element ist ein Schaltventil 5 vorgesehen, das im Hochdruckbereich angeordnet ist und in Abhängigkeit von seiner Lage relativ zu einem Ventilsitz 7 einen Öffnungsquerschnitt 8 bildet, über den mehr oder weniger Kraftstoff in einen Zulaufkanal ZK fließen kann, der zwischen einem Anschluß Z und dem Öffnungsquerschnitt 8 gebildet ist. In diesem Zulaufkanal ZK ist ein entsprechender Niederdruck (Zulaufdruck P0) vorhanden. Das Schaltventil 5 wird über einen hydraulischen Koppler 4 von einem Aktor 2 betätigt, der über Klemmen + und
- eine Ansteuerspannung Ua empfängt. Der Aktor 2 weist im Wesentlichen ein piezoelektrisches Element auf, das in Abhängigkeit vom Verlauf der Ansteuerspannung Ua eine Längenausdehnung ausführt. Je nach Längenänderung des Aktors 2 wird über den hydraulischen Koppler 4 das Schaltventil 5 bewegt und erreicht beliebige Zwischenstellungen im sogenannten ballistischen Betrieb. Sitzt dagegen das Schaltventil 5 auf dem Ventilsitz 7 auf, dann ist der sogenannte nichtballistische Betrieb mit dem Öffnungsquerschnitt = 0 erreicht.

Der Erfindung liegt nun die Idee zugrunde, das Schaltventil 5 durch das Ansteuersignal Ua in der Amplitude und Ansteuerdauer so auszubilden, dass in jedem Betriebszustand des Verbrennungsmotors die gewünschte einzuspritzende Kraftstoffmenge durch die Lage des Schaltventils 5 und dessen Verweildauer in einer Position erreicht wird. Dabei wird von der Erkenntnis ausgegangen, dass bei einem Maximalwert des Ansteuersignals Ua, d. h. bei der maximalen Ansteuerspannung Umax das Schaltventil 5 fest auf dem Ventilsitz 7 aufliegt und somit der Öffnungsquerschnitt zu 0 wird. Dadurch wird eine Kraftstoffmenge in Abhängigkeit von der Förderdauer FD, die in Grad pro Kurbelwinkel der Kurbel- oder Nockenwelle angegeben werden kann, eingespritzt. Alternativ ist auch eine Einspritzdauer im Zeitmaßstab vorgebbar. Im ballistischen Betrieb dagegen reduziert sich die Einspritzmenge - jeweils bei konstanter Einspritzdauer gemessen - weil je nach Stellung des Schaltventils 5 über den Öffnungsquerschnitt 8 mehr oder weniger Kraftstoff in den Zulaufkanal ZK in Richtung Z abfließen kann. Durch eine optimale Steuerung der Position des Schaltventils 5 und auch der Förderdauer FD, die von der Länge des Ansteuersignals Ua abhängt, kann die einzuspritzende Kraftstoffmenge gesteuert werden. Dabei können vorteilhaft alle Betriebszustände oder Anforderungen an das Abgas oder dem Fahrverhalten berücksichtigt werden.

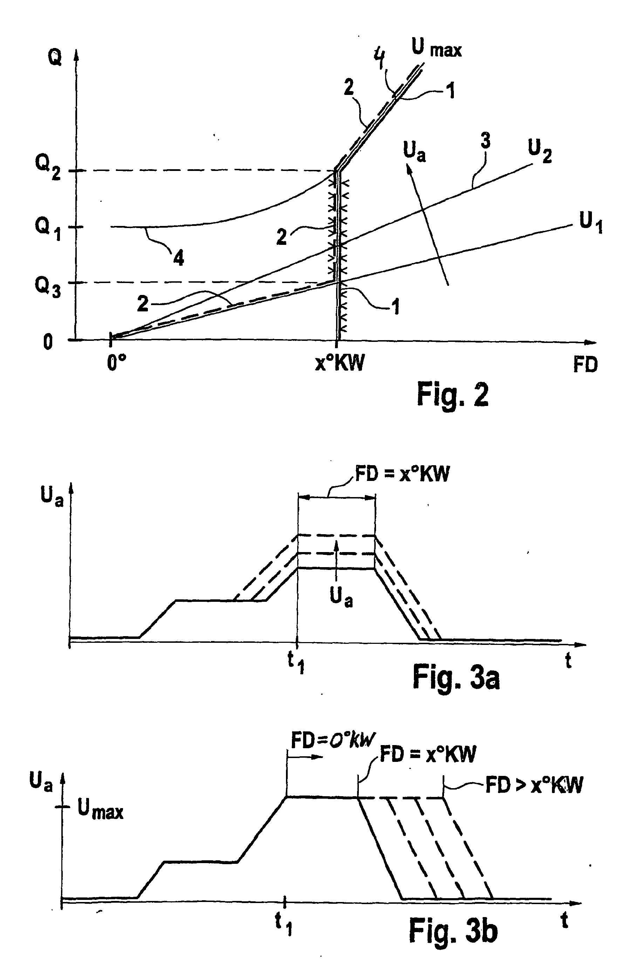

Figur 2 zeigt nun ein erstes Diagramm mit Förder-/ Einspritzmengen-Kennlinien, nach denen ein erstes Ausführungsbeispiel für Ansteuerverläufe gebildet werden kann. Auf der x-Achse ist die Förderdauer FD und auf der y-Achse die eingespritzte Kraftstoffmenge Q aufgetragen. Die Förderdauer wird dabei vorzugsweise in Winkelgraden der Kurbelwelle KW angegeben.

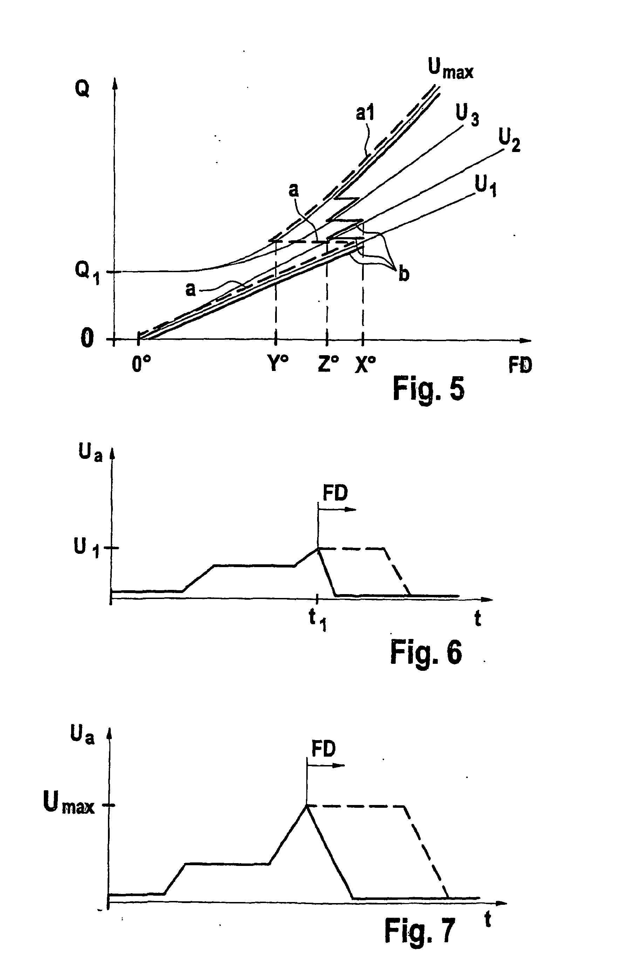

Anhand von verschiedenen Kurven ist nun die Beeinflussung der Fördermenge Q dargestellt. Die Kurve 1 beginnt beispielsweise bei Q = 0 mm³ Fördermenge, wobei die Förderdauer zunächst auf den Wert x° KW konstant gehalten ist. Das Schaltventil 5 befindet sich dabei im ballistischen Betrieb, d. h. der Öffnungsquerschnitt 8 hat zunächst seinen größten Wert, so dass die Fördermenge Q = 0 wird. Mit zunehmender Steuerspannung Ua wird der Öffnungsquerschnitt 8 kleiner, so dass die Fördermenge Q entlang der Kurve 1 ansteigt, bis am Knickpunkt zunächst der Maximalwert Q2 erreicht ist. Bei diesem sitzt das Schaltventil 5 auf dem Ventilsitz 7 auf und hat den Zulaufkanal ZK geschlossen. Eine weitere Vergrößerung der einzuspritzenden Kraftstoffmenge Q ist nunmehr entlang dem linearen Teil der Kurve 1 nur durch eine Verlängerung der Förderdauer FD möglich. Die Kurve 4 beginnt mit der Fördermenge Q1 und geht mit zunehmendem FD in den rechten Zweig der Kurven 1 bzw. 2 über. Q1 ist dabei die Fördermenge bei Uₘₐₓ, d.h. wenn das Schaltventil 5 im Ventilsitz 7 aufliegt und der Öffnungsquerschnitt 8 geschlossen (=0) ist. Q1 ist dabei deutlich größer als die geforderte kleinste Menge. Entsprechendes gilt für Q1 auch in Figur 5.

Im ballistischen Betrieb wird beispielsweise entsprechend den Geraden 2 und 3 das Schaltventil 5 durch die Spannung U1 oder U2 in einer Zwischenstellung gehalten, so dass mehr oder weniger viel Kraftstoff aus dem Hochdruckkanal in den Zulaufkanal ZK abfließen kann. Entsprechend sind dann die Fördermengen Q gegeben. Beispielsweise ist auf der Geraden 2 bei der Ansteuerspannung U1 entnehmbar, dass die Fördermenge linear mit der Förderdauer FD steigt. Die Gerade 3 zeigt, dass bei höherer Ansteuerspannung U2 auch die Fördermenge Q größer wird, da durch die höhere Spannung der Öffnungsquerschnitt 8 kleiner wird. Wird beispielsweise im ballistischen Betrieb für den linken Zweig der Kurve 2 eine Spannung U1 gewählt, so steigt die Fördermenge bei der Förderdauer x° KW bis auf den Wert Q3. Mit zunehmender Ansteuerspannung Ua und konstanter Förderdauer FD steigt nun die Fördermenge Q entsprechend der senkrechten Teilkennlinie an, bis der Wert Q2 erreicht ist. Danach wird wieder die Förderdauer FD verlängert, so dass die Kurve 2 wieder wie Kurve 1 verläuft. In diesem Zweig liegt wieder ein nichtballistischer Betrieb vor. Der Übergang in den nichtballistischen Betrieb erfolgt bei der Fördermenge Q2, dessen Wert unter anderem vom Aktortyp abhängt.

Die Kennlinien für das Ansteuersignal Ua gemäß den Figuren 3a und 3b zeigen Ansteuerzyklen für den Übergang vom ballistischen zum nichtballistischen Betrieb durch Spannungszunahme. Dabei ist in Figur 3a der Ansteuerverlauf für die Kurve 1 der Figur 2 mit dem ballistischen Bereich dargestellt. Wie der Figur 3a weiter entnehmbar ist, wird die Ansteuerspannung Ua stufenweise erhöht bis zum Zeitpunkt t1 die Kraftstofförderung für die Einspritzung beginnt. Die Spannung Ua kann gemäß Figur 3a entsprechend den gestrichelten Kurven variiert werden. Die Förderdauer FD bleibt dabei konstant. Nach dem Abschalten fällt die Steuerspannung Ua entsprechend der dargestellten Flanken bis auf den Wert 0 ab.

In Figur 3b wird mit Erreichen der Maximalspannung Umax dagegen wahlweise die Förderdauer FD erhöht, so dass sich in diesem Fall die gestrichelten Kennlinien ergeben. Dies gilt für den nichtballistischen Betrieb der Kurve 4 der Figur 2.

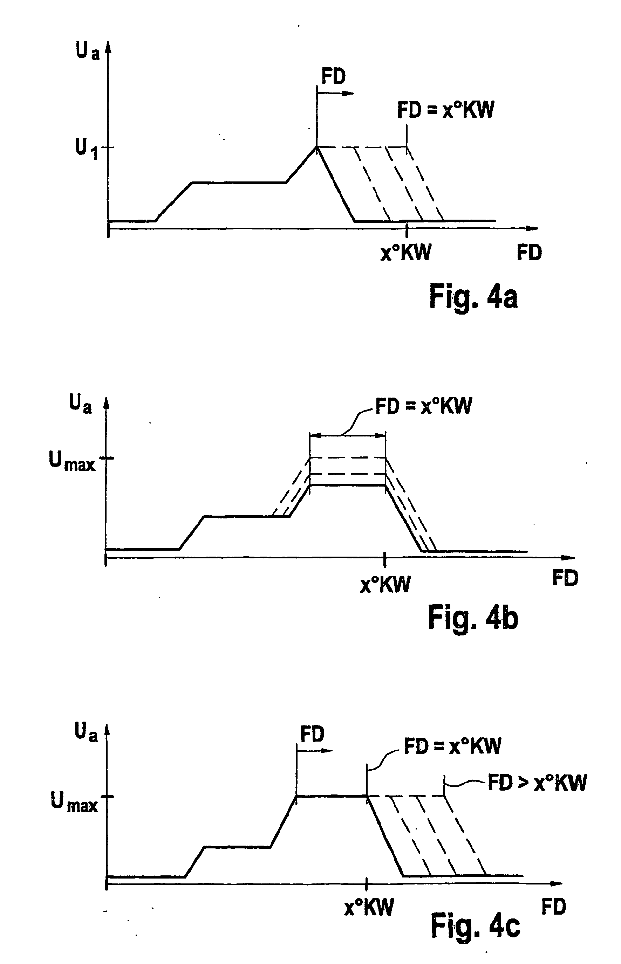

Die Figuren 4a bis 4c zeigen weitere Kennlinien für das Ansteuersignal. So wird beispielsweise gemäß Figur 4a bei einer Ansteuerspannung Ua = U1 das Schaltventil 5 im ballistischen Betrieb gehalten. Die Förderdauer wird nun von 0° bis x° KW entsprechend der gestrichelten Kennlinien oder einer entsprechenden Zeitdauer verlängert (linker Zweig der Kurve 2 in Figur 2). Erreicht nun beispielsweise die Förderdauer FD den Wert x° KW, dann steigt die Fördermenge Q entsprechend dem senkrechten Zweig der Kurve 2 in Figur 2 an, weil das Steuersignal Ua gemäß der Figur 4b erhöht wurde. Das Schaltventil 5 liegt nun bei dem Wert Umax fest auf dem Ventilsitz 7 auf. Gemäß Figur 4c wird nun die Förderdauer FD verlängert, wie den gestrichelten Kurven entnehmbar ist. Entsprechend ändert sich die Fördermenge Q entlang der rechten Teilkurve 2 in Figur 2.

Für die Ansteuerspannung Ua = U2 der Figur 2 gilt das entsprechende Verhalten.

Die Figuren 5 bis 7 zeigen nun ein weiteres Ausführungsbeispiel, wie durch Abstimmung zwischen Förderdauer FD und Spannungsanstieg Überschneidungen vermieden werden können, indem ein oder mehrere Sprünge eingefügt werden. Figur 5 zeigt ein zweites Fördermengen-Diagramm mit Sprüngen in der Ansteuerung, bei dem auf der x-Achse wieder die Förderdauer FD und auf der y-Achse die Fördermenge Q aufgetragen ist. Die Kurve a zeigt nun eine nichtlineare Kurve mit einem Sprung. So wird beispielsweise ausgehend von der Förderdauer FD = 0° zunächst die Förderdauer FD entlang der Kurve a (mit der Ansteuerspannung U1) erhöht, bis die Förderdauer FD = x° erreicht ist. In dieser Position wird sowohl die Amplitude der Steuerspannung Ua als auch die Förderdauer FD geändert. Die geförderte Kraftstoffmenge bleibt dabei gleich. Beispielsweise wird die Spannung auf den Maximalwert gesetzt und die Förderdauer auf den Wert y° begrenzt. Eine Zunahme der Fördermenge Q ist jetzt nur noch entlang der weiteren Kurve a1 möglich, wenn wiederum die Förderdauer FD verlängert wird.

In alternativer Ausgestaltung der Erfindung sind anstelle eines Sprunges auch mehrere Sprünge möglich. Dieses ist durch die Kennlinien b dargestellt. So wird die Förderdauer FD zwischen den Werten x° und z° umgeschaltet. Erreicht beispielsweise die Förderdauer entsprechend der Spannung U1 den Wert x°, dann wird auf die Steuerspannung U2 hochgeschaltet und gleichzeitig die Förderdauer auf den Wert z° reduziert. Nun wird wieder die Förderdauer FD verlängert, bis wieder der Wert x° erreicht ist. An diesem Punkt wird entsprechend der Kennlinie b wieder zurückgeschaltet auf die nächst höhere Spannung U3 mit der Förderdauer z°. Nun wird wiederum die Förderdauer FD verlängert, bis der Wert x° erreicht ist. Nunmehr wird auf die Kennlinie a1 wieder zurückgesprungen, wie im vorigen Beispiel dargestellt wurde. Diese Kennlinie a1 entspricht der maximalen Ansteuerspannung Uₘₐₓ, die für den gewählten Aktortyp zulässig ist. Zu beachten ist jedoch, dass die Umschaltung bzw. der Sprung von FD und Ua jeweils in Punkten mit gleicher Fördermenge Q erfolgt. Die Anzahl der Sprünge ist frei wählbar. Viele kleine Sprünge ergeben ein besseres Toleranz- und Motorverhalten als wenige große Sprünge.

Die Figuren 6 und 7 zeigen entsprechende Spannungsverläufe für die Ansteuerspannung U1 für den ballistischen Betrieb. Entsprechend der Figur 6 wird die Steuerspannung Ua erhöht, bis zum Zeitpunkt t1 der Förderbeginn einsetzt. Nun wird die Förderdauer FD verlängert, wie der gestrichelten Kurve entnehmbar ist. Erreicht gemäß der Figur 7 die Ansteuerspannung Ua den Maximalwert Umax, dann liegt ein nichtballistischer Betrieb vor, bei dem entsprechend der gestrichelten Linie die Förderdauer verlängert wird.

## Patentansprüche

1. Verfahren zur Steuerung eines Einspritzventils/Injektors (1), um eine vorgegebene Kraftstoffmenge in den Zylinder eines Verbrennungsmotors einzuspritzen, wobei das Einspritzventil (1) ein Schaltventil (5) aufweist, das von einem Aktor (2) angesteuert wird und dabei einen Zulaufkanal (ZK) öffnet oder schließt, **dadurch gekennzeichnet, dass** zur Steuerung der Kraftstoffmenge das Ansteuersignal (Ua) für den Aktor (2) sowohl in seiner Höhe als auch in seiner Dauer verändert wird.

2. Verfahren nach Anspruch 1, **dadurch gekennzeichnet, dass** das Ansteuersignal (Ua) für eine kleine Einspritzmenge so niedrig ist, dass das Schaltventil (5) im ballistischen Betrieb mit einem Öffnungsquerschnitt (8) für einen Zulaufkanal (ZK) gehalten wird und dass für zunehmende Einspritzmengen das Ansteuersignal (Ua) erhöht wird, um den Öffnungsquerschnitt (8) des Zulaufkanals (ZK) zu verengen.

3. Verfahren nach Anspruch 2, **dadurch gekennzeichnet, dass** das Ansteuersignal (Ua) soweit erhöht wird, bis das Schaltventil (5) in einen nichtballistischen Betrieb geht und den Zulaufkanal (ZK) schließt.

4. Verfahren nach einem der vorhergehenden Ansprüche, **dadurch gekennzeichnet, dass** zur Erhöhung der einzuspritzenden Kraftstoffmenge die Dauer des Ansteuersignals (Ua) bzw. die Förderdauer (FD) verlängert wird.

5. Verfahren nach Anspruch 4, **dadurch gekennzeichnet, dass** die Förderdauer (FD) so lange erhöht wird, bis die eingespritzte Kraftstoffmenge größer ist als die bei geschlossenem Steuerventil (5) erreichbare Menge bei einem kurzen Ansteuersignal (Ua) mit hoher Amplitude.

6. Verfahren nach Anspruch 4 oder 5, **dadurch gekennzeichnet, dass** wenigstens ein Sprung erfolgt, bei dem die Förderdauer und die Amplitude des Ansteuersignals (Ua) gleichzeitig verändert werden.

7. Verfahren nach Anspruch 6, **dadurch gekennzeichnet, dass** bei nur einem Sprung die maximale Amplitude des Ansteuersignals (Ua) gewählt wird und zur Bestimmung der Einspritzmenge die Förderdauer (FD) verändert wird.

8. Verfahren nach einem der vorhergehenden Ansprüche, **dadurch gekennzeichnet, dass** die Ansteuerspannung für die einzuspritzende Kraftstoffmenge durch mehrere Sprünge erfolgt, wobei bei jedem Sprung die Förderdauer und die Amplitude des Ansteuersignals (Ua) geändert werden.

9. Verfahren nach einem der vorhergehenden Ansprüche, **dadurch gekennzeichnet, dass** die Amplitude des Ansteuersignals (Ua) und die Förderdauer (FD) so lange geändert werden, bis das Ansteuersignal (Ua) seinen Maximalwert (Umax) erreicht hat.

10. Verfahren nach Anspruch 9, **dadurch gekennzeichnet, dass** eine weitere Mengenzunahme durch Verlängerung der Förderdauer (FD) erfolgt.

11. Verfahren nach einem der vorhergehenden Ansprüche, **dadurch gekennzeichnet, dass** als Aktor ein piezoelektrisches Element (2) verwendet wird.

## Revendications

1. Procédé de commande d'un injecteur (1), afin d'injecter une quantité de carburant prédéterminée dans le cylindre d'un moteur à combustion interne, l'injecteur (1) présentant une soupape de commutation (5) commandée par un actionneur (2) et ouvrant ou fermant un canal d'arrivée (ZK),
**caractérisé en ce que**
pour la commande de la quantité de carburant, on modifie le signal de commande (Ua) de l'actionneur (2) à la fois dans son amplitude et dans sa durée.

2. Procédé selon la revendication 1,
**caractérisé en ce que**
pour une faible quantité d'injection, le signal de commande (Ua) est bas de façon à maintenir la soupape de commutation (5) en mode balistique avec une section d'ouverture (8) du canal d'arrivée (ZK), et pour des quantités d'injection croissantes, le signal de commande (Ua) est augmenté afin de réduire la section d'ouverture (8) du canal d'arrivée (ZK).

3. Procédé selon la revendication 2,
**caractérisé en ce que**
le signal de commande (Ua) est augmenté jusqu'à ce que la soupape de commutation (5) entre dans un mode non balistique et ferme le canal d'arrivée (ZK).

4. Procédé selon l'une quelconque des revendications précédentes,
**caractérisé en ce que**
pour augmenter la quantité de carburant à injecter, on allonge la durée du signal de commande (Ua) ou la durée d'alimentation (FD).

5. Procédé selon la revendication 4,
**caractérisé en ce qu'**
on allonge la durée d'alimentation (FD) jusqu'à ce que la quantité de carburant injectée soit supérieure à la quantité pouvant être atteinte lorsque la soupape de commande (5) est fermée, avec un signal de commande (Ua) bref ayant une amplitude importante.

6. Procédé selon la revendication 1 ou 5,
**caractérisé en ce qu'**
on produit au moins un saut au cours duquel la durée d'alimentation et l'amplitude du signal de commande (Ua) sont modifiées simultanément.

7. Procédé selon la revendication 6,
**caractérisé en ce que**
dans le cas d'un seul saut, on choisit l'amplitude maximale du signal de commande (Ua) et on modifie la durée d'alimentation (FD) pour déterminer la quantité d'injection.

8. Procédé selon l'une quelconque des revendications précédentes,
**caractérisé en ce que**
la tension de commande pour la quantité de carburant à injecter est réalisée en plusieurs sauts, en modifiant à chaque saut la durée d'alimentation et l'amplitude du signal de commande (Ua).

9. Procédé selon l'une quelconque des revendications précédentes,
**caractérisé en ce qu'**
on modifie l'amplitude du signal de commande (Ua) et la durée d'alimentation (FD) jusqu'à ce que le signal de commande (Ua) atteint sa valeur maximale (Umax).

10. Procédé selon la revendication 9,
**caractérisé en ce qu'**
on produit une autre augmentation de quantité par allongement de la durée d'alimentation (FD).

11. Procédé selon l'une quelconque des revendications précédentes,
**caractérisé en ce que**
comme actionneur on utilise un élément piézo-électrique (2).

## Claims

1. Method for controlling an injection valve/injector (1) in order to inject a predefined fuel quantity into the cylinder of an internal combustion engine, the injection valve (1) having a control valve (5) which is actuated by an actuator (2) and opens or closes an inlet duct (ZK) in this way, **characterized in that**, in order to control the fuel quantity, the actuation signal (Ua) for the actuator (2) is changed both in magnitude and in duration.

2. Method according to Claim 1, **characterized in that** the actuation signal (Ua) for a small fuel quantity is so low that the control valve (5) is kept in a ballistic operating mode with an aperture cross section (8) for an inlet duct (ZK), and **in that**, for increasing injection quantities, the actuation signal (Ua) is increased in order to reduce the aperture cross section (8) of the inlet duct (ZK).

3. Method according to Claim 2, **characterized in that** the actuation signal (Ua) is increased until the control valve (5) goes into a non-ballistic operating mode and closes the inlet duct (ZK).

4. Method according to one of the preceding claims,
**characterized in that**, in order to increase the fuel quantity to be injected, the duration of the actuation signal (Ua) and/or the feed duration (FD) are extended.

5. Method according to Claim 4, **characterized in that** the feed duration (FD) is increased until the injected fuel quantity is greater than the quantity attainable with a closed control valve (5) and a short, high amplitude actuation signal (Ua).

6. Method according to Claim 4 or 5, **characterized in that** at least one step occurs in which the feed duration and the amplitude of the actuation signal (Ua) are changed simultaneously.

7. Method according to Claim 6, **characterized in that**, in just one step, the maximum amplitude of the actuation signal (Ua) is selected and, in order to determine the injection quantity, the feed duration (FD) is changed.

8. Method according to one of the preceding claims, **characterized in that** the actuation voltage for the fuel quantity to be injected is implemented by means of a plurality of steps, the feed duration and the amplitude of the actuation signal (Ua) being changed in each step.

9. Method according to one of the preceding claims, **characterized in that** the amplitude of the actuation signal (Ua) and the feed duration (FD) are changed until the actuation signal (Ua) reaches its maximum value (Umax).

10. Method according to Claim 9, **characterized in that** a further increase in quantity is implemented by extending the feed duration (FD).

11. Method according to one of the preceding claims,
**characterized in that** a piezoelectric element (2) is used as an actuator.
